(19) **Europäisches Patentamt / European Patent Office / Office européen des brevets**

(11) **EP 4 496 253 A1**

(12) **EUROPEAN PATENT APPLICATION**
published in accordance with Art. 153(4) EPC

(43) Date of publication:
**22.01.2025 Bulletin 2025/04**

(21) Application number: **23787800.4**

(22) Date of filing: **13.04.2023**

(51) International Patent Classification (IPC):
**H04L 5/00** (2006.01)    **H04B 7/155** (2006.01)

(52) Cooperative Patent Classification (CPC):
**H04B 7/155; H04L 5/00**

(86) International application number:
**PCT/CN2023/088130**

(87) International publication number:
**WO 2023/198158 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.04.2022 CN 202210386305**

(71) Applicant: **ZTE Corporation**
**Shenzhen, Guangdong 518057 (CN)**

(72) Inventors:
• **GUO, Xiaojiang**
  **Shenzhen, Guangdong 518057 (CN)**
• **LI, Jie**
  **Shenzhen, Guangdong 518057 (CN)**

(74) Representative: **Pennacchio, Salvatore Giovanni**
**Jacobacci & Partners S.p.A.**
**Via Senato, 8**
**20121 Milano (IT)**

(54) **CHANNEL SEPARATION METHOD AND SYSTEM**

(57)    Provided are a channel separation method and a system. The method includes: When a plurality of reference signals are reflected through an intelligent reflecting surface or repeater, the intelligent reflecting surface or repeater switches a codebook of each reference signal to a corresponding intelligent reflecting surface codebook, wherein each reference signal corresponds to a different intelligent reflecting surface or repeater codebook. By the embodiments of the present disclosure, when each reference signal passes by, an intelligent reflecting surface or repeater switches a codebook of each reference signal to a corresponding intelligent reflecting surface codebook, thus achieving that a base station of a receiving end can obtain channel-dimension received data information of the intelligent reflecting surface or repeater according to the intelligent reflecting surface codebook.

When a plurality of reference signals are reflected through an intelligent reflecting surface or repeater, the intelligent reflecting surface or repeater switches a codebook of each reference signal to a corresponding intelligent reflecting surface codebook, wherein each reference signal corresponds to a different intelligent reflecting surface or repeater codebook

S202

Fig. 2

EP 4 496 253 A1

Description

Technical Field

Embodiments of the present disclosure relate to the field of communications, and in particular, to a channel separation method and system.

Background

An intelligent reflecting surface is a hot research direction in a beyond 5th-generation mobile communication system (B5G) and a 6th-generation mobile communication system (6G). The intelligent reflecting surface can greatly enhance filling performed by a wireless signal on a dead zone signal and increase the number of independent signal transmission channels in a hot spot region, and is a low-cost wireless signal enhancement scheme. In general, it is difficult for a base station to obtain channel-dimension received data information of the intelligent reflecting surface. In the related technology, the channel-dimension received data information of the intelligent reflecting surface can be obtained through beam training of the intelligent reflecting surface. However, this method has high codebook design or solving complexity.

Summary

The embodiments of the present disclosure provide a channel separation method and system, to at least solve the problem that the scheme in the related technology for obtaining channel-dimension received data information of an intelligent reflecting surface has high codebook design or solving complexity.

According to an embodiment of the present disclosure, a channel separation method is provided, including: When a plurality of reference signals are reflected through an intelligent reflecting surface or repeater, the intelligent reflecting surface or repeater switches a codebook of each reference signal to a corresponding intelligent reflecting surface codebook, wherein each reference signal corresponds to a different intelligent reflecting surface or repeater codebook.

According to another embodiment of the present disclosure, a channel separation system is provided, including: an intelligent reflecting surface or repeater, configured to: when a plurality of reference signals are reflected through the intelligent reflecting surface or repeater, switch a codebook of each reference signal to a corresponding intelligent reflecting surface codebook, wherein each reference signal corresponds to a different intelligent reflecting surface or repeater codebook.

According to still another embodiment of the present disclosure, a computer-readable storage medium is further provided. The computer-readable storage medium has a computer program stored therein, and the computer program is configured for, when run, executing the steps in any one of the method embodiments.

According to yet still another embodiment of the present disclosure, an electronic apparatus is further provided, including a memory and a processor. The memory has a computer program stored therein. The processor is configured for running the computer program to execute the steps in any one of the method embodiments.

Brief Description of the Drawings

Fig. 1 is a schematic diagram of an intelligent reflecting surface in the related technology;

Fig. 2 is a flowchart of a channel separation method according to an embodiment of the present disclosure;

Fig. 3 is a structural block diagram of a channel separation system according to an embodiment of the present disclosure;

Fig. 4 is a flowchart of a channel separation method using a 1bit intelligent reflecting surface according to an embodiment of the present disclosure;

Fig. 5 is a flowchart of a channel separation method according to another embodiment of the present disclosure; and

Fig. 6 is a flowchart of a channel separation method according to still another embodiment of the present disclosure.

## Detailed Description of the Embodiments

The embodiments of the present disclosure will be described in detail below with reference to the accompanying drawings and the embodiments.

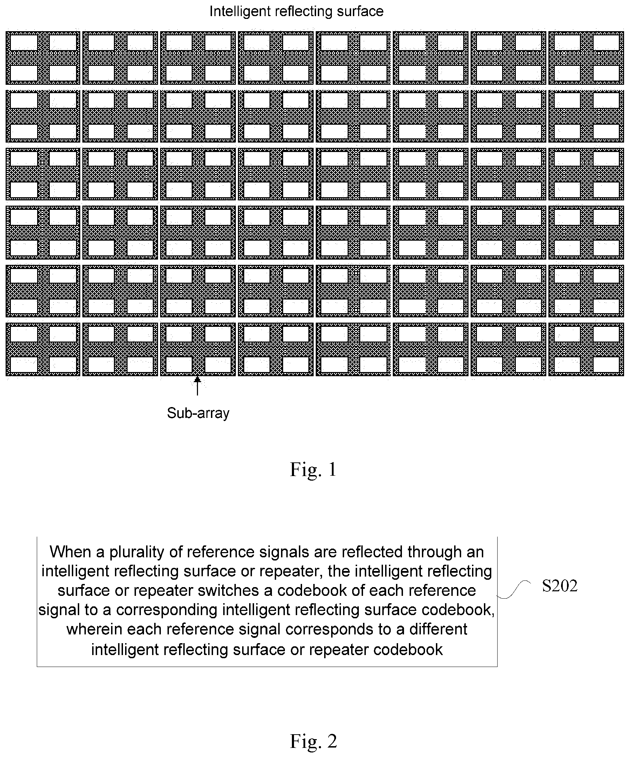

In the related technology, an intelligent reflecting surface or repeater is a low-cost wireless signal enhancement scheme. Fig. 1 is a schematic diagram of an intelligent reflecting surface in the related technology. As shown in Fig. 1, the intelligent reflecting surface is divided into a plurality of channels. Usually, it is difficult for a base station to obtain channel-dimension received data information of the intelligent reflecting surface. The embodiments of the present disclosure provide a channel separation method and system, which are applied to the intelligent reflecting surface or repeater mentioned above, to obtain the channel-dimension received data information of the intelligent reflecting surface or repeater.

Fig. 2 is a flowchart of a channel separation method according to an embodiment of the present disclosure. As shown in Fig. 2, the flow includes the following steps:

Step S202, when a plurality of reference signals are reflected through an intelligent reflecting surface or repeater, the intelligent reflecting surface or repeater switches a codebook of each reference signal to a corresponding intelligent reflecting surface codebook, wherein each reference signal corresponds to a different intelligent reflecting surface or repeater codebook.

In step S202 of this embodiment, before the intelligent reflecting surface or repeater switches a codebook of each reference signal to a corresponding intelligent reflecting surface codebook, the method further includes: A base station configures or appoints, for the intelligent reflecting surface or repeater, parameters used for separating logic channels of the intelligent reflecting surface or repeater, wherein the parameters include: a first parameter, used for indicating a quantity of logic channels needing to be separated; a second parameter, used for indicating a codebook set configured for the logic channels of the intelligent reflecting surface or repeater, wherein the codebook set comprises logic channel codebooks corresponding to the quantity of the logic channels; and a third parameter, used for indicating a sub-array codebook configured for a physical array of each logic channel.

In an exemplary embodiment, the intelligent reflecting surface codebook is a Kronecker product of a logic channel codebook and a corresponding sub-array codebook.

In an exemplary embodiment, the first parameter includes: a quantity of logic channels needing to be separated in an azimuth dimension and a pitching dimension of the intelligent reflecting surface or repeater, or a quantity of azimuth-dimension and pitching-dimension physical arrays contained in each logic channel.

In an exemplary embodiment, each logic channel codebook is represented using 1bit information; a sequence of the logic channel codebooks in the codebook set is indicated based on an appointment or through a signaling of the base station; and the quantity of the logic channel codebooks in the codebook set is greater than or equal to the quantity of the logic channels.

In an exemplary embodiment, all the sub-array codebooks in the same logic channel are the same.

In an exemplary embodiment, in a case that the base station obtains an initial amplitude and phase of the reference signal, each logic channel corresponds to one logic channel codebook; and in a case that the base station does not obtain an initial amplitude and phase of the reference signal, at least one logic channel corresponds to a plurality of logic channel codebooks.

In an exemplary embodiment, before the intelligent reflecting surface or repeater switches a codebook of each reference signal to a corresponding intelligent reflecting surface codebook, the method further includes: The base station configures the plurality of reference signals, wherein a quantity of the reference signals is equal to an integral multiple of the quantity of the logic channel codebooks.

In an exemplary embodiment, the reference signals configured on each Orthogonal Frequency Division Multiplexing (OMDF) symbol occupy a same Resource Block (RB), and quantities of Resource Element (RE) occupied on various RBs are the equal.

In step S202 of this embodiment, after the base station configures the plurality of reference signals, the method further includes: The base station informs, through a signaling, the intelligent reflecting surface or repeater of a slot where the reference signals are located and a position of an OFDM symbol where the reference signals are located.

Step S202 of this embodiment includes: The intelligent reflecting surface or repeater switches the codebook of each reference signal to the corresponding intelligent reflecting surface codebook based on the slot of the reference signal and the position of the OFDM symbol.

After step S202 of this embodiment, the method further includes: After a base station receives the reference signals, logic channels of the intelligent reflecting surface or repeater are separated according to the codebooks switched from the reference signals.

In an exemplary embodiment, logic channels of the intelligent reflecting surface or repeater are separated according to the codebooks switched from each reference signal, which includes: In a case that the base station does not obtain an initial amplitude and phase of the reference signal, amplitude and phase compensation is performed on the reference signal through different logic channel codebooks corresponding to the same logic channel, and the various logic channels are separated according to the compensated reference signals.

In an exemplary embodiment, the quantity of the logic channels needing to be separated is N; the codebook set comprises N logic channel codebooks; and each logic channel codebook comprises N elements with the same amplitudes, wherein a difference between an $M^{th}$ element in an $M^{th}$ codebook and another element is 180 degrees, where N is an integer greater than 1 and M is an integer greater than or equal to 1 and less than or equal to N.

By the above steps, when each reference signal passes by, an intelligent reflecting surface or repeater switches a codebook of each reference signal to a corresponding intelligent reflecting surface codebook, so that a base station of a receiving end can obtain channel-dimension received data information of the intelligent reflecting surface or repeater according to the intelligent reflecting surface codebook. Therefore, this can solve the problem the method for obtaining the channel-dimension received data information of the intelligent reflecting surface through beam training of the intelligent reflecting surface has high codebook design or solving complexity, and achieve an effect of reducing the computation complexity.

According to the descriptions in the foregoing implementations, a person skilled in the art may clearly learn that the method according to the foregoing embodiments may be implemented by relying on software and an essential commodity hardware platform or by using hardware, but the former is a better implementation in most cases. Based on such an understanding, the technical solutions of the embodiments of the present disclosure essentially, or the part contributing to the prior art, may be presented in the form of a software product. The computer software product is stored in a storage medium (for example, a read-only memory (ROM)/random access memory (RAM), a magnetic disk, or a compact disc) including several instructions to enable a terminal device (which may be a mobile phone, a computer, a server, a network device, or the like) to perform the methods described in all the embodiments of the present disclosure.

This embodiment further provides a channel separation system. The system is configured to achieve the above embodiments and preferable implementations, which will not be elaborated here. Although the apparatus described in the following embodiments is preferably implemented in software, the implementation of hardware or a combination of software and hardware is also possible and envisioned.

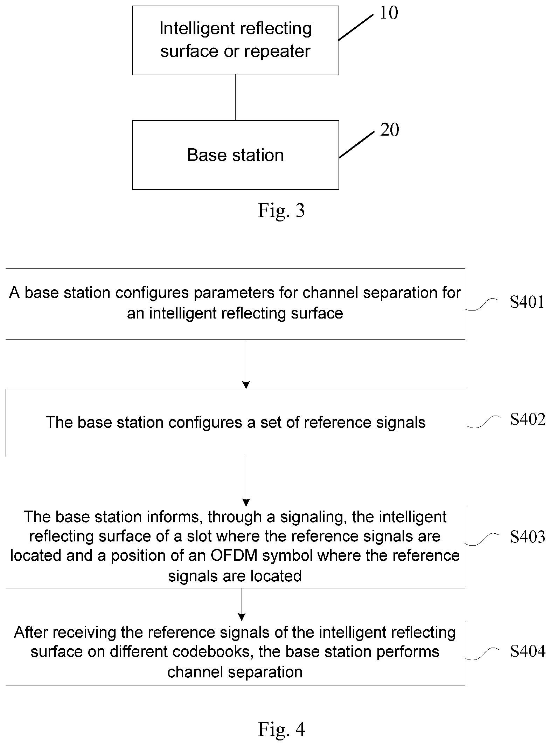

Fig. 3 is a structural block diagram of a channel separation system according to an embodiment of the present disclosure. As shown in Fig. 3, the system includes: an intelligent reflecting surface or repeater 10 and a base station 20.

The intelligent reflecting surface or repeater 10 is configured to: when a plurality of reference signals are reflected through the intelligent reflecting surface or repeater, switch a codebook of each reference signal to a corresponding intelligent reflecting surface codebook, wherein each reference signal corresponds to a different intelligent reflecting surface or repeater codebook.

The base station 20 is configured to configure or appoint, for the intelligent reflecting surface or repeater, parameters used for separating logic channels of the intelligent reflecting surface or repeater, wherein the parameters include:

a first parameter, used for indicating a quantity of logic channels needing to be separated;

a second parameter, used for indicating a codebook set configured for the logic channels of the intelligent reflecting surface or repeater, wherein the codebook set comprises logic channel codebooks corresponding to the quantity of the logic channels; and

a third parameter, used for indicating a sub-array codebook configured for a physical array of each logic channel.

In an exemplary embodiment, the base station is further configured to inform, through a signaling, the intelligent reflecting surface or repeater of a slot where the reference signals are located and a position of an OFDM symbol where reference signals are located.

In an exemplary embodiment, the base station is further configured to: after receiving the reference signals, separate logic channels of the intelligent reflecting surface or repeater according to the codebooks switched from the reference signals.

It should be noted that the above modules can be implemented through software or hardware. For the latter, the various modules can be implemented in the following ways, but not limited to: The above modules are all located in the same processor; or, the aforementioned modules can be located in different processors in the form of any combination.

For ease of understanding the technical solutions provided by the present disclosure, a detailed explanation will be made below in combination with the embodiments of specific scenarios.

The embodiments of the present disclosure provide a channel separation method and system. Channel-dimension information of an intelligent reflecting surface can be quickly obtained by using 1bit channel-dimension codebook control. Under an extreme condition, multiplication and division operations will not be performed in the whole process, and the computation complexity is low.

In the related technology, principles of codebook designing and channel separation are as follows:
It is assumed that a quantity of logic channels on the intelligent reflecting surface is $N_{row} \times N_{col}$. The channels here can be an actual physical array, or the entire intelligent reflecting surface may be divided into several logic channels, where $N_{row}$ and $N_{col}$ represent a quantity of channels in a longitudinal dimension and a quantity of channels in a horizontal dimension of the intelligent reflecting surface, respectively. As shown in Fig. 1, an actual quantity of physical arrays shown in the figure is $12 \times 16$. If $2 \times 2$ physical matrixes are used as one sub-array (i.e. logic channel), each sub-array has a same codebook. There are $6 \times 8$ logic channels in total.

It is assumed that before being reflected to the intelligent reflecting surface, received data is X, where X is a matrix including $N_{row}N_{col}$ rows and L columns, and each row of X corresponds to a channel of the intelligent reflecting surface. A weighting factor of the intelligent reflecting surface is $\Phi$, where $\Phi$ is a diagonal matrix of $N_{row}N_{col} \times N_{row}N_{col}$. A principal diagonal element is the weighting factor, and a non-principal diagonal element is 0. A reflected signal that is reflected and weighted by the intelligent reflecting surface is $\Phi$X. It is assumed that a channel between a receiving end and the intelligent reflecting surface is $H_{r\text{-}ris}$, a received signal Y at the receiving end may be represented as:

$$\mathbf{Y} = \mathbf{H}_{r,ris}\mathbf{\Phi}\mathbf{X} + \mathbf{n} \qquad\qquad \text{Formula (1)}$$

where n represents received signal noise, or the like.

Usually, it is assumed that X remains unchanged during observation time, or remains unchanged after certain pre-compensation. Some information of the intelligent reflecting surface can be obtained through the weighting factor $\Phi$ of the intelligent reflecting surface by beam training and some calculations.

The embodiments of the present disclosure provide a 1bit intelligent reflecting surface channel separation method, and principles of codebook designing and channel separation are as follows:

It is assumed that the weighting factor of the intelligent reflecting surface has a value of $\Phi$k, where

$$\begin{aligned}
\mathbf{\Phi}_k(k,k) &= -1 \\
\mathbf{\Phi}_k(k',k') &= 1 \quad, k' \neq k \qquad\qquad \text{Formula (2)}\\
\mathbf{\Phi}_k(i,j) &= 0 \quad, i \neq j
\end{aligned}$$

$\Phi_k$ may alternatively be any value in the above form, such as multiplying the whole by a coefficient.

It is assumed that received data of the receiving end corresponding to the weighting factor $\Phi_k$ is $Y_k$, noise of which is ignored, and there is:

$$\mathbf{Y}_k = \mathbf{H}_{r,ris}\mathbf{\Phi}_k\mathbf{X} \quad, k = 1,2,\cdots,N_{row}N_{col} \qquad\qquad \text{Formula (3)}$$

By summing $N_{row}N_{col}Y_k$s and dividing the sum by ($N_{row}N_{col}$ - 2), there may be $Y_{temp}$

$$\begin{aligned}
\mathbf{Y}_{temp} &= \frac{1}{N_{row}N_{col}-2}\sum_{k=1}^{N_{row}N_{col}}\mathbf{H}_{r,ris}\mathbf{\Phi}_k\mathbf{X} \qquad\qquad \text{Formula (4)}\\
&= \mathbf{H}_{r,ris}\mathbf{\Phi}_{temp}\mathbf{X}
\end{aligned}$$

Where $\Phi_{temp}$ may be represented as

$$\mathbf{\Phi}_{temp} = \frac{1}{N_{row}N_{col}-2}\sum_{k=1}^{N_{row}N_{col}}\mathbf{\Phi}_k \qquad\qquad \text{Formula (5)}$$

There may be

$$\begin{aligned}
\mathbf{\Phi}_{temp}(k,k) &= 1 \quad, k = 1,2,\cdots,N_{row}N_{col}\\
\mathbf{\Phi}_k(i,j) &= 0 \quad, i \neq j
\end{aligned} \qquad\qquad \text{Formula (6)}$$

$Y_{temp}$ in Formula (4) may alternatively be obtained through codebooks with principal diagonals of 1, but the quantity of the codebooks will increase.

Data reflected by a kth channel of the intelligent reflecting surface may be expressed as $\mathbf{Y}_{from\ RIS\text{-}k}$

$$\mathbf{Y}_{from\,RIS-k} = \frac{1}{2}\left(\mathbf{Y}_{temp} - Y_k\right)$$

$$= \frac{1}{2}\mathbf{H}_{r,ris}\left(\mathbf{\Phi}_{temp} - \mathbf{\Phi}_k\right)\mathbf{X} \qquad \text{Formula (7)}$$

Where according to $\Phi_{temp}$ -$\Phi_k$ , only a kth element on the principal diagonal is 1, and all other elements are 0.

From the above, it can be seen that the multiplication and division operations in the intelligent reflecting surface channel separation algorithm are only found in Formula (4) and Formula (7): dividing by $N_{row}N_{col}$ -2 and dividing by 2, respectively. Dividing by 2 can be achieved through shifting. In case of $N_{row}N_{col}$ -2 = $2^n$, when n is a positive integer, dividing by $N_{row}N_{col}$ -2 may be achieved through shifting too. Thus, the entire separation process does not involve any multiplication and division operations.

In this embodiment, based on the above principles of codebook designing and channel separation, parameters for separating channels of the intelligent reflecting surface are configured, namely, the base station configures parameters for channel separation to the intelligent reflecting surface, including:

(1) The base station configures a quantity of azimuth-dimension and pitching-dimension logic channels needing to be separated, which may be configuring a quantity $N_{col}$ of channels to be separated alone in an azimuth dimension, or configuring a quantity $N_{row}$ of channels to be separated alone in a pitching dimension, or configuring quantities $N_{col}$ and $N_{row}$ of channels to be separated in both an azimuth dimension and a pitching dimension.

In this embodiment, the base station may further configure a quantity of physical arrays of each logic channel in the azimuth or pitching dimension. For example, m azimuth physical arrays and n pitching physical arrays can be configured for each logic channel, and m and n can be configured separately or together. If the intelligent reflecting surface has M physical arrays in an azimuth dimension and N physical arrays in a pitching dimension, the quantities of logic channels may be calculated: $N_{col}$ = M / m and $N_{row}$ = N/n.

(2) The base station needs to configure a codebook set, regarding logic channels, for the intelligent reflecting surface. Each codebook only includes the logic channel quantity of codebook elements. Each element may be represented by 1it information. A sequence of the codebooks in the set may be pre-appointed or indicated by a signaling of the base station. The quantity of the codebooks in the set is greater than or equal to the quantity $N_{col} \times N_{row}$ of the logic channels. Since this codebook set conforms to a certain mathematical law, the codebook set may be pre-appointed too. When the codebook set works in different slots and reference signals transmitted in different slots have random amplitude and phase hops, it is necessary to repeat a codebook in some additional slots.

(3) When mn is not equal to 1, the base station further needs to configure a corresponding sub-array level codebook for each sub-array. The codebooks of all the sub-arrays are the same, and this codebook includes m * n elements. A codebook of the entire intelligent reflecting surface is obtained in combination with a logic channel codebook and a corresponding sub-array codebook, and is mathematically expressed as a Kronecker product of the logic channel codebook and the corresponding sub-array codebook.

In this embodiment, the base station configures a set of reference signals, and the reference signals configured on each OFDM symbol should occupy at least a same RB, and each RB occupies the same quantity of REs. The quantity of the reference signals is equal to an integer multiple of the quantity of the codebooks for channel separation. The quantity of the reference signals is equal to the quantity of the codebooks for channel separation by default.

In this embodiment, the base station informs, through a signaling, the intelligent reflecting surface of a slot where the configured reference signals are located and a numeral of an OFDM symbol where reference signals are located, and the reference signals on each OFDM symbol correspond to one intelligent reflecting surface codebook. When the symbol where the reference signals are located passes through the intelligent reflecting surface, the intelligent reflecting surface should switch the codebook to a corresponding codebook.

The embodiments of the present disclosure further design a set of low-complexity codebooks for intelligent reflecting surface channel separation. If the codebooks are configured to separate N logic channels, the set of codebooks have the following features:

In each codebook, there are N-1 identical elements. It is assumed that these identical elements are a, and the remaining element is -a.

A position where -a appears in this codebook set needs to occupy all positions in the N elements.

Fig. 4 is a flowchart of a 1bit intelligent reflecting surface channel separation method according to an embodiment of the present disclosure. Based on the above principles of codebook designing and channel separation, as shown in Fig. 4, the 1bit intelligent reflecting surface channel separation method in this embodiment of the present disclosure includes the following steps:

Step S401: A base station configures parameters for channel separation for an intelligent reflecting surface.

Specifically, the parameters are mainly used for indicating:

(1) a quantity of logic channels needing to be separated. Quantities of logic channels needing to be separated in an azimuth dimension and a pitching dimension can be directly configured, or a quantity of azimuth-dimension or pitching-dimension physical matrixes included in each logic channel may be configured. The quantities of the azimuth-dimension or pitching-dimension physical matrixes should be integer multiples of the quantities of the corresponding logic channels.

(2) The base station needs to configure a codebook set, regarding logic channels, for the intelligent reflecting surface. Each codebook only includes the logic channel quantity of codebook elements. Each element may be represented by 1it information. A sequence of the codebooks in the set may be pre-appointed or indicated by a signaling of the base station. The quantity of the codebooks in the set is greater than or equal to the quantity of the logic channels. Since this codebook set conforms to a certain mathematical law, the codebook set may be pre-appointed too.

(3) If several physical arrays that form each logic channel are considered as a sub-array, when the quantity of the physical arrays in each sub-array is greater than 1, the base station usually needs to configure a codebook for each sub-array of the intelligent reflecting surface. The codebooks for all the sub-arrays are the same, so only one sub-array needs to be configured with codebooks. The configuration of the codebooks of the sub-array may be a specific codebook or an indicator label of a codebook, or may be a default codebook that is set in advance.

Step S402: The base station configures a set of reference signals.

Specifically, the quantity of the reference signals is equal to the quantity of the codebooks in the codebook set of the logic channels, and the intelligent reflecting surface needs to continuously switch the configured codebooks on different OFDM symbols corresponding to the reference signals.

Step S403: The base station informs, through a signaling, the intelligent reflecting surface of a slot where the reference signals are located and a position of an OFDM symbol where the reference signals are located.

Specifically, the reference signals on each OFDM symbol correspond to one intelligent reflecting surface codebook. When the symbol where the reference signals are located passes through the intelligent reflecting surface, the intelligent reflecting surface should switch the codebook to a corresponding codebook.

Step S404: After receiving the reference signals of the intelligent reflecting surface on different codebooks, the base station performs channel separation.

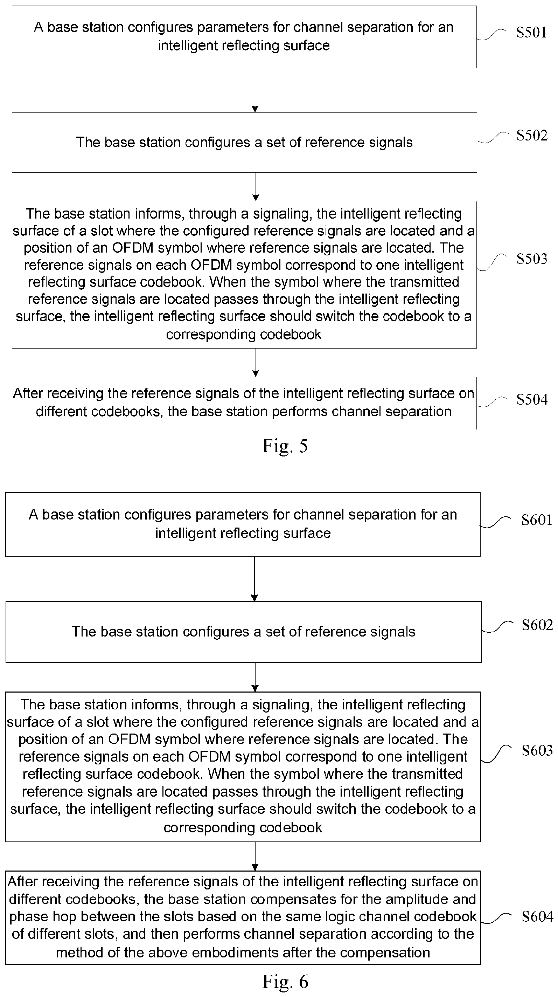

Fig. 5 is a flowchart of a channel separation method according to another embodiment of the present disclosure. In this embodiment, assuming that a receiving end can obtain an initial amplitude and phase of each reference signal, it can be considered that a transmission state of each reference signal is known. For example, for a plurality of consecutive reference signals, each reference signal occupies an OFDM symbol, and the initial phase of each reference signal is known. As shown in Fig. 5, the method includes the following steps:

Step S501: A base station configures parameters for channel separation for an intelligent reflecting surface.

Specifically, the intelligent reflecting surface of Fig. 1 is taken as an example. The parameters are used for indicating:

(1) A quantity of physical arrays in an azimuth dimension of each logical channel is 2, and a quantity of physical arrays in a pitching dimension of each logic channel is 2, which means that the intelligent reflecting surface is divided into logical channels, each having a sub-array of $2\times2$. Since the base station can know in advance that the actual quantity of the physical arrays of the intelligent reflecting surface is $12 \times 16$, it means that the intelligent reflecting surface is divided into $6 \times 8$ logical channels.

(b) The base station configures a codebook set related to the logical channels for the intelligent reflecting surface. For example, this codebook set includes $6\times8$ codebooks, and each codebook includes 48 elements with the same amplitudes. A difference between a phase of an $n^{th}$ element in an $n^{th}$ codebook and a phase of another element is 180 degrees. In this embodiment, the codebook set may be pre-appointed, thereby avoiding signaling overheads.

(c) A sub-array level codebook is configured for the sub-arrays included in each logical channel. The sub-array codebooks of all the logic channels are the same. In this way, all the sub-arrays have the same beam direction. The configuration of the sub-array codebook can be a specific codebook or an indicator label of a codebook, or a default codebook may be set in advance.

Step S502: The base station configures a set of reference signals.

Specifically, in this embodiment, the quantity of the reference signals is equal to the quantity of the logical channels, which is 48. The intelligent reflecting surface needs to continuously switch the configured codebooks on different time domain symbols corresponding to the reference signals.

In this embodiment, a weighted value of the codebook of each physical array is equal to a value obtained by multiplying a weight of the sub-array level codebook by a codebook weight of the logic channel corresponding to the sub-array.

Step S503: The base station informs, through a signaling, the intelligent reflecting surface of a slot where the configured reference signals are located and a position of an OFDM symbol where reference signals are located. The reference signals on each OFDM symbol correspond to one intelligent reflecting surface codebook. When the symbol where the transmitted reference signals are located passes through the intelligent reflecting surface, the intelligent reflecting surface should switch the codebook to a corresponding codebook.

Step S504: After receiving the reference signals of the intelligent reflecting surface on different codebooks, the base station performs channel separation.

Fig. 6 is a flowchart of a channel separation method according to still another embodiment of the present disclosure. In this embodiment, it is assumed that a receiving end cannot obtain an initial amplitude and phase of each reference signal, and there may be a random amplitude and phase hop between the reference signals of a transmission end (for example, for reference signals distributed on a plurality of slots, there may be a random amplitude and phase hop between different slots). Therefore, during channel separation, the amplitude and phase hop between the reference signals needs to be compensated for first, to ensure that the various reference signals have the same initial states.

For example, as shown in Fig. 1, the quantity of the physical arrays of the intelligent reflecting surface in this figure is $12 \times 16$, and each logical channel includes a sub-array of $2 \times 2$. Since there are 48 logical channels, at least 48 reference signals are required. If OFDM signals are used, each slot contains 14 symbols, and at least four slots need to be used to obtain 48 OFDM symbols. When initial phases of the four slots have random hops, at least one same codebook needs to be used for the slots.

As shown in Fig. 6, the method includes the following steps:

Step S601: A base station configures parameters for channel separation for an intelligent reflecting surface.

Specifically, based on the intelligent reflecting surface of Fig. 1, the parameters are used for indicating:

(1) A quantity of physical arrays in an azimuth dimension of each logical channel is 2, and a quantity of physical arrays in a pitching dimension of each logic channel is 2, which means that the intelligent reflecting surface is divided into logical channels, each having a sub-array of $2 \times 2$. Since the base station can know in advance that the actual quantity of the physical arrays of the intelligent reflecting surface is $12 \times 16$, it means that the intelligent reflecting surface is divided into $6 \times 8$ logical channels.

(b) The base station configures a codebook set related to the logical channels for the intelligent reflecting surface. For example, this codebook set includes totally 51 codebooks, including $6 \times 8$ different codebooks, which are respectively assumed to be $\Phi1$, $\Phi2$, and ..., $\Phi48$. Each codebook includes 48 elements with the same amplitudes. A difference between a phase of an $n^{th}$ element in an $n^{th}$ codebook and a phase of another element is 180 degrees. The codebook set is divided into four groups. It is assumed that the first group includes codebooks $\Phi1$ to $\Phi12$; the second group includes codebooks $\Phi12$ to $\Phi24$; the third group includes codebooks $\Phi24$ to $\Phi36$; and the fourth group includes codebooks $\Phi36$ to $\Phi48$, totally 51 codebooks. Of course, there are many other choices for the grouping of the codebooks and the selection of each group, as long as the amplitude and phase hop between the slots can be compensated for in principle. In this embodiment, the grouping and division of the codebook set can be pre-appointed, thereby avoiding signaling overheads.

(3) A sub-array level codebook is configured for the sub-arrays included in each logical channel. In this embodiment, the sub-array codebooks of all the logic channels are the same. In this way, all the sub-arrays have the same beam direction.

In this embodiment, the configuration of the sub-array codebook can be a specific codebook or an indicator label of a codebook, or a default codebook may be set in advance.

Step S602: The base station configures a set of reference signals.

Specifically, the quantity of the reference signals is equal to the quantity of the logical channels, which is 48, and is equal to the quantity of the codebooks in the codebook set related to the logic channel. The intelligent reflecting surface needs to continuously switch the configured codebooks on different time domain symbols corresponding to the reference signals.

In this embodiment, a weighted value of the codebook of each physical array is equal to a value obtained by multiplying a weight of the sub-array level codebook by a codebook weight of the logic channel corresponding to the sub-array.

Step S603: The base station informs, through a signaling, the intelligent reflecting surface of a slot where the configured reference signals are located and a position of an OFDM symbol where reference signals are located, and the reference signals on each OFDM symbol correspond to one intelligent reflecting surface codebook. When the symbol where the transmitted reference signals are located passes through the intelligent reflecting surface, the intelligent reflecting surface should switch the codebook to a corresponding codebook.

Step S604: After receiving the reference signals of the intelligent reflecting surface on different codebooks, the base station compensates for the amplitude and phase hop between the slots based on the same logic channel codebook of different slots, and then performs channel separation according to the method of the above embodiments after the compensation.

It should be noted that the intelligent reflecting surfaces RISs in all the embodiments described above of the present disclosure can be replaced with repeaters. Specific examples can be found in the examples described in the above embodiments and exemplary implementations. This embodiment will not elaborate the repeater here.

Through the above embodiments, channel-dimension information of an intelligent reflecting surface can be quickly obtained by using 1bit channel-dimension codebook control. Under an extreme condition, multiplication and division operations will not be performed in the whole process, and the computation complexity is low. This solves the problem the method for obtaining the channel-dimension received data information of the intelligent reflecting surface through beam training of the intelligent reflecting surface has high codebook design or solving complexity, and achieve an effect of reducing the computation complexity.

The embodiments of the present disclosure further provide a computer-readable storage medium, having a computer program stored therein. The computer program is configured for, when run, executing the steps in any one of the method embodiments.

In an exemplary embodiment, the computer-readable storage medium mentioned above can include but not limited to: various media that can store computer programs, such as a USB flash drive, a Read-Only Memory (ROM), a Random Access Memory (RAM), a mobile hard disk drive, a magnetic disk, and an optical disk.

The embodiments of the present disclosure further provide an electronic apparatus, including a memory and/or a processor. The memory stores a computer program. The processor is configured for running the computer program to execute the steps in any one of the method embodiments.

In an exemplary embodiment, the aforementioned electronic apparatus may further include a transmission device and an input/output device, wherein the transmission device is connected to the above processor, and the input/output device is connected to the above processor.

The specific examples in this embodiment can refer to the examples described in the above embodiments and exemplary implementations, and will not be elaborated in this embodiment.

Obviously, those skilled in the art should understand that the various modules or steps of the embodiments of the present disclosure can be implemented using a universal computing apparatus, which can be concentrated on a single computing apparatus or distributed on a network composed of a plurality of computing apparatuses. The modules or steps can be implemented using program codes that can be executed by a computing apparatus, so that the modules or steps can be stored in a storage apparatus for execution by the computing apparatus. Furthermore, in some cases, the steps shown or described can be executed in an order different from those here, or the steps can be separately made into various integrated circuit modules, or a plurality of modules or steps among the modules or steps can be made into single integrated circuit modules for implementation. In this way, the present disclosure is not limited to any specific combinations of hardware and software.

The above descriptions are only preferred embodiments of the present disclosure, and are not intended to limit the present disclosure. For those skilled in the art, the present disclosure may have various modifications and changes. Any modification, equivalent replacement, and improvement made within the principle of the present disclosure shall fall within the protection scope of the present disclosure.

**Claims**

1. A channel separation method, comprising:
   when a plurality of reference signals are reflected through an intelligent reflecting surface or repeater, switching, by the intelligent reflecting surface or repeater, a codebook of each reference signal to a corresponding intelligent reflecting surface codebook, wherein each reference signal corresponds to a different intelligent reflecting surface or repeater codebook.

2. The method according to claim 1, wherein before the switching, by the intelligent reflecting surface or repeater, a codebook of each reference signal to a corresponding intelligent reflecting surface codebook, the method further comprises:
   configuring or appointing, for the intelligent reflecting surface or repeater by a base station, parameters used for separating logic channels of the intelligent reflecting surface or repeater, wherein the parameters comprise:

   a first parameter, used for indicating a quantity of logic channels needing to be separated;
   a second parameter, used for indicating a codebook set configured for the logic channels of the intelligent reflecting surface or repeater, wherein the codebook set comprises logic channel codebooks corresponding to the quantity of the logic channels; and
   a third parameter, used for indicating a sub-array codebook configured for a physical array of each logic channel.

3. The method according to claim 2, wherein the intelligent reflecting surface codebook is a Kronecker product of a logic channel codebook and a corresponding sub-array codebook.

4. The method according to claim 2, wherein the first parameter comprises: a quantity of logic channels needing to be separated in an azimuth dimension and a pitching dimension of the intelligent reflecting surface or repeater, or a quantity of azimuth-dimension and pitching-dimension physical arrays contained in each logic channel.

5. The method according to claim 2, wherein each logic channel codebook is represented using 1bit information; a sequence of the logic channel codebooks in the codebook set is indicated based on an appointment or through a signaling of the base station; and the quantity of the logic channel codebooks in the codebook set is greater than or equal to the quantity of the logic channels.

6. The method according to claim 2, wherein all the sub-array codebooks in the same logic channel are the same.

7. The method according to claim 5, wherein

   in a case that the base station obtains an initial amplitude and phase of the reference signal, each logic channel corresponds to one logic channel codebook; and
   in a case that the base station does not obtain an initial amplitude and phase of the reference signal, at least one logic channel corresponds to a plurality of logic channel codebooks.

8. The method according to claim 2, wherein before the switching, by the intelligent reflecting surface or repeater, a codebook of each reference signal to a corresponding intelligent reflecting surface codebook, the method further comprises:
   configuring, by the base station, the plurality of reference signals, wherein a quantity of the reference signals is equal to an integral multiple of the quantity of the logic channel codebooks.

9. The method according to claim 8, wherein the reference signals configured on each Orthogonal Frequency Division Multiplexing, OMDF, symbol occupy a same Resource Block, RB, and quantities of Resource Element, RE, occupied on various RBs are the equal.

10. The method according to claim 9, wherein after the configuring, by the base station, the plurality of reference signals, the method further comprises:
    informing, by the base station through a signaling, the intelligent reflecting surface or repeater of a slot where the reference signals are located and a position of an OFDM symbol where the reference signals are located.

11. The method according to claim 10, wherein the switching, by the intelligent reflecting surface or repeater, a codebook of each reference signal to a corresponding intelligent reflecting surface codebook comprises:
    switching, by the intelligent reflecting surface or repeater, the codebook of each reference signal to the corresponding intelligent reflecting surface codebook based on the slot where the reference signal is located and the position of the OFDM symbol where the reference signal is located.

12. The method according to claim 1, wherein after the switching, by the intelligent reflecting surface or repeater, a codebook of each reference signal to a corresponding intelligent reflecting surface codebook, the method further comprises:

after a base station receives the reference signals, separating logic channels of the intelligent reflecting surface or repeater according to the codebooks switched from the reference signals.

13. The method according to claim 12, wherein the separating logic channels of the intelligent reflecting surface or repeater according to the codebook switched from each reference signal comprises:

in a case that the base station does not obtain an initial amplitude and phase of the reference signal, performing amplitude and phase compensation on the reference signal through different logic channel codebooks corresponding to the same logic channel, and separating the various logic channels according to the compensated reference signals.

14. The method according to claim 2, wherein the quantity of the logic channels needing to be separated is N; the codebook set comprises N logic channel codebooks; and each logic channel codebook comprises N elements with the same amplitudes, wherein a difference between an $M^{th}$ element in an $M^{th}$ codebook and another element is 180 degrees, wherein N is an integer greater than 1 and M is an integer greater than or equal to 1 and less than or equal to N.

15. A channel separation system, comprising:

an intelligent reflecting surface or repeater, configured to: when a plurality of reference signals are reflected through the intelligent reflecting surface or repeater, switch a codebook of each reference signal to a corresponding intelligent reflecting surface codebook, wherein each reference signal corresponds to a different intelligent reflecting surface or repeater codebook.

16. The system according to claim 15, further comprising:

a base station, configured to configure or appoint, for the intelligent reflecting surface or repeater, parameters used for separating logic channels of the intelligent reflecting surface or repeater, wherein the parameters comprise:

a first parameter, used for indicating a quantity of logic channels needing to be separated;
a second parameter, used for indicating a codebook set configured for the logic channels of the intelligent reflecting surface or repeater, wherein the codebook set comprises logic channel codebooks corresponding to the quantity of the logic channels; and
a third parameter, used for indicating a sub-array codebook configured for a physical array of each logic channel.

17. The system according to claim 16, wherein

the base station is further configured to inform, through a signaling, the intelligent reflecting surface or repeater of a slot where the reference signals are located and a position of an OFDM symbol where the reference signals are located.

18. The system according to claim 16, wherein

the base station is further configured to: after receiving the reference signals, separate logic channels of the intelligent reflecting surface or repeater according to the codebooks switched from the reference signals.

19. A computer-readable storage medium, having a computer program stored thereon, wherein the computer program is figured to, when executed by a processor, cause the processor to implement the steps of the method according to any one of claims 1 to 14.

20. An electronic apparatus, comprising a memory, a processor, and a computer program stored on the memory and runnable on the processor, wherein the processor is configured to execute the computer program to implement the steps of the method according to any one of claims 1 to 14.

Intelligent reflecting surface

Sub-array

Fig. 1

When a plurality of reference signals are reflected through an intelligent reflecting surface or repeater, the intelligent reflecting surface or repeater switches a codebook of each reference signal to a corresponding intelligent reflecting surface codebook, wherein each reference signal corresponds to a different intelligent reflecting surface or repeater codebook

S202

Fig. 2

Intelligent reflecting surface or repeater — 10

Base station — 20

Fig. 3

A base station configures parameters for channel separation for an intelligent reflecting surface — S401

The base station configures a set of reference signals — S402

The base station informs, through a signaling, the intelligent reflecting surface of a slot where the reference signals are located and a position of an OFDM symbol where the reference signals are located — S403

After receiving the reference signals of the intelligent reflecting surface on different codebooks, the base station performs channel separation — S404

Fig. 4

A base station configures parameters for channel separation for an intelligent reflecting surface — S501

The base station configures a set of reference signals — S502

The base station informs, through a signaling, the intelligent reflecting surface of a slot where the configured reference signals are located and a position of an OFDM symbol where reference signals are located. The reference signals on each OFDM symbol correspond to one intelligent reflecting surface codebook. When the symbol where the transmitted reference signals are located passes through the intelligent reflecting surface, the intelligent reflecting surface should switch the codebook to a corresponding codebook — S503

After receiving the reference signals of the intelligent reflecting surface on different codebooks, the base station performs channel separation — S504

Fig. 5

A base station configures parameters for channel separation for an intelligent reflecting surface — S601

The base station configures a set of reference signals — S602

The base station informs, through a signaling, the intelligent reflecting surface of a slot where the configured reference signals are located and a position of an OFDM symbol where reference signals are located. The reference signals on each OFDM symbol correspond to one intelligent reflecting surface codebook. When the symbol where the transmitted reference signals are located passes through the intelligent reflecting surface, the intelligent reflecting surface should switch the codebook to a corresponding codebook — S603

After receiving the reference signals of the intelligent reflecting surface on different codebooks, the base station compensates for the amplitude and phase hop between the slots based on the same logic channel codebook of different slots, and then performs channel separation according to the method of the above embodiments after the compensation — S604

Fig. 6

## INTERNATIONAL SEARCH REPORT

| | International application No. |
| --- | --- |
| | **PCT/CN2023/088130** |

**A. CLASSIFICATION OF SUBJECT MATTER**

H04L 5/00(2006.01)i; H04B 7/155(2006.01)i

According to International Patent Classification (IPC) or to both national classification and IPC

**B. FIELDS SEARCHED**

Minimum documentation searched (classification system followed by classification symbols)

IPC:H04L H04W H04B

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 智能反射面, 智能反射平面, IRS, intelligent reflexing surface, 中继, 参考信号, 码本, 参数, 矩阵, 切换, relay, reference signal, codebook, matrix, parameter, handoff, handover

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115865289 A (ZTE CORP.) 28 March 2023 (2023-03-28) claims 1-20 | 1-20 |
| PX | CN 115865288 A (ZTE CORP.) 28 March 2023 (2023-03-28) description, paragraphs [0031]-[0117] | 1-20 |
| X | US 2022077919 A1 (QUALCOMM INCORPORATED) 10 March 2022 (2022-03-10) description, paragraphs [0100]-[0102], [0115]-[0121], [0280], and [0281] | 1, 15, 19, 20 |
| A | CN 111050276 A (HUAZHONG UNIVERSITY OF SCIENCE AND TECHNOLOGY) 21 April 2020 (2020-04-21) entire document | 1-20 |
| A | CN 111917448 A (SHENZHEN UNIVERSITY) 10 November 2020 (2020-11-10) entire document | 1-20 |
| A | HUAWEI et al. "Enhancement for UL AoA Positioning" *3GPP TSG RAN WG1 Meeting #104-e R1-2100237*, 05 February 2021 (2021-02-05), entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 June 2023** | **03 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/088130**

| Patent document cited in search report | | | Publication date (day/month/year) | Patent family member(s) | | | Publication date (day/month/year) |
|---|---|---|---|---|---|---|---|
| CN | 115865289 | A | 28 March 2023 | None | | | |
| CN | 115865288 | A | 28 March 2023 | None | | | |
| US | 2022077919 | A1 | 10 March 2022 | WO | 2022055943 | A1 | 17 March 2022 |
| | | | | IN | 202327002399 | A | 24 February 2023 |
| CN | 111050276 | A | 21 April 2020 | None | | | |
| CN | 111917448 | A | 10 November 2020 | None | | | |

Form PCT/ISA/210 (patent family annex) (July 2022)